(19) Europäisches Patentamt

European Patent Office

Office européen des brevets

(11) **EP 1 326 145 A1**

(12) **EUROPEAN PATENT APPLICATION**
published in accordance with Art. 158(3) EPC

(43) Date of publication:
**09.07.2003 Bulletin 2003/28**

(51) Int Cl.⁷: **G03H 1/26**

(21) Application number: **01984392.9**

(22) Date of filing: **31.07.2001**

(86) International application number:
**PCT/JP01/06578**

(87) International publication number:
**WO 02/010863 (07.02.2002 Gazette 2002/06)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **31.07.2000 JP 2000231998**

(71) Applicants:
• **Hamamatsu Photonics K.K.**
  **Shizuoka-ken 435-8558 (JP)**
• **Artnow Ltd.**
  **Mutsu-shi, Aomori 035-0073 (JP)**

(72) Inventors:
• **TAKEMORI, Tamiki Hamamatsu Photonics K.K.**
  **Hamamatsu-shi Shizuoka 435-8558 (JP)**
• **KON, Kenji ARTNOW LTD.**
  **Mutsu-shi Aomori 035-0073 (JP)**

(74) Representative: **Musker, David Charles et al**
**R.G.C. Jenkins & Co.**
**26 Caxton Street**
**London SW1H 0RJ (GB)**

(54) **HOLOGRAM PRODUCING METHOD**

(57)     The distance between a spatial light modulating device 7 and a lens 8 is set such that a real or virtual image position 9, 9' (L, L') of object light formed by the lens 8 is an observing position of a hologram 12'. Since a reconstructed image is fixed at the observing position L, L', noise existing in the reconstructed image of the spatial light modulating device 7' if any is fixed at the observing position and thus is unremarkable as noise, whereby the noise is substantially lowered.

*Fig.1*

EP 1 326 145 A1

**Description**

**Technical Field**

The present invention relates to a one-step type hologram making method.

**Background Art**

(Conventional Example 1)

Japanese Patent Application Laid-Open No. HEI 3-249686 discloses an example of making a one-step type Lippmann hologram having longitudinal and lateral parallaxes.

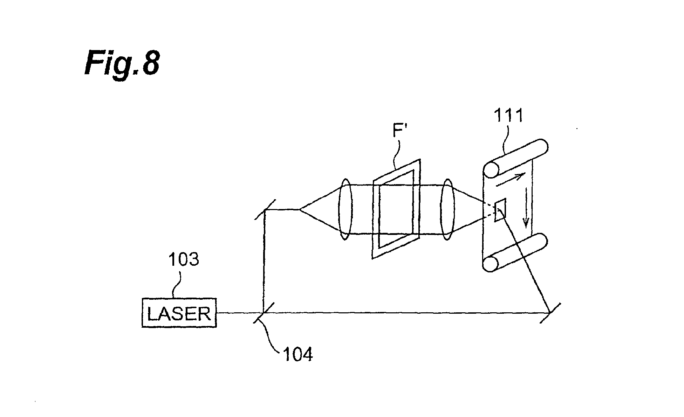

Fig. 8 is a diagram showing the two-dimensional hologram making apparatus disclosed in the above-mentioned publication. In this hologram making apparatus, laser light outputted from a laser light source 103 is split into two beams by a beam splitter 104. One of thus split laser beams is caused to expand its luminous flux diameter by a lens system and is made incident on a spatial light modulating device F' such as a transmission type liquid crystal display. After being subjected to amplitude modulation by individual pixels of the spatial light modulating device F' displaying images from respective viewpoints prepared by a computer, this laser beam is converged by a lens onto a photosensitive material 111 and interferes with the reference light incident on the photosensitive material 111 from the backside, which is the other of the two laser beams split by the beam splitter 104.

Thus, dot-like elementary holograms are arranged into a matrix with intervals of 0.3 mm to 0.5 mm on the photosensitive material 111, whereby a Lippmann hologram is made. At the time of reconstruction, the hologram is irradiated with parallel light having a large luminous flux diameter from the direction identical to the direction of incidence of the reference light, so that respective reconstruction waves are generated from the individual elementary holograms on the hologram 111, whereby an object image is reconstructed.

In this case, the light converged by the lens yields a locally high intensity. Some techniques have been proposed for keeping the latent image density of the photosensitive material from exceeding the dynamic range due to the localization.

(Conventional Example 2)

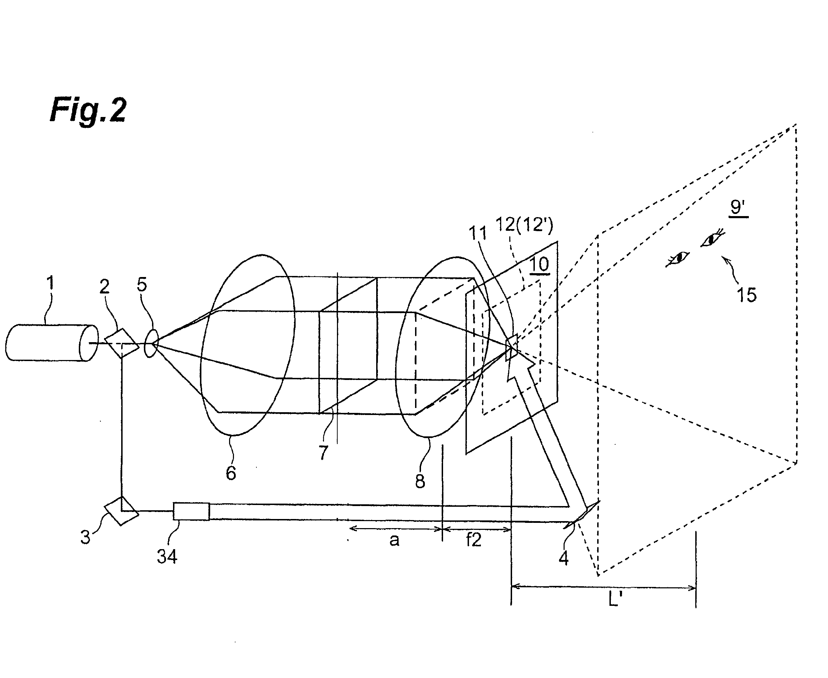

For example, "Holographic Display" (pp. 194-195, Fig. 2.42, Jumpei Tsujiuchi, ed., published on December 7, 1990, Sangyo Tosho Publishing Co., Ltd.) has been known as a literature. This literature discloses a method of making a holographic stereogram comprising the steps of projecting an image onto a diffuser screen, and converging thus projected image with a field lens.

Though this apparatus is an example of one-dimensional stereogram, the image projected on the diffuser screen is diffused light, whereby this technique can be modified into a method of recording a two-dimensional stereogram (dot-like elementary holograms) by utilizing the fact that the concentration of light is obstructed.

Though Conventional Example 2 does not clearly indicate the positional relationship between the image projected on the diffuser screen and the condenser lens, and the positional relationship between the spatial light modulating device and the condenser lens when a phase plate is used without the diffuser screen, they are assumed to be disposed at given positions.

(Conventional Example 3)

Japanese Patent Application Laid-Open No. HEI 6-266274 discloses a technique for preventing a condenser lens from locally concentrating light by arranging phase modulating means for yielding a phase modulation on the optical path of object light, or a pseudorandom diffuser which is a specific example thereof. While Conventional Example 2 proposes a diffuser on the optical path of the object light, Conventional Example 3 uses a pseudorandom diffuser as a diffuser so as to restrain light from diffusing and concentrating more than necessary.

In this technique, the pseudorandom diffuser is disposed near immediately upstream the spatial light modulating device so as to impart respective phase differences to the individual elements of the spatial light modulating device independently from each other, or is disposed near immediately downstream the spatial light modulating device so as to impart a phase difference thereto.

As with Conventional Example 2, Conventional Example 3 does not clearly indicate the positional relationship between the image projected on the diffuser screen and the condenser lens, and the positional relationship between the spatial light modulating device and the condenser lens when a phase plate is used without the diffuser screen. As a consequence, they are assumed to be disposed at given positions.

In the case where a spatial light modulating device typically represented by a liquid crystal panel in which a liquid crystal is held between thick protective glass sheets and a phase plate are disposed close to each other so as to impart respective phase changes to the individual modulating elements of the spatial light modulating device, when a high-definition liquid crystal panel with narrow modulating element intervals is used in particular, in the method of Conventional Example 3, the emitted light broadens by the thickness of the glass sheets due to the diffraction, which makes it difficult to generate respective phase changes for the individual modulating elements.

If a projection optical system is used so as to project a luminous flux transmitted through the phase-modulating phase plate onto the spatial light modulating device or project an image displayed on the spatial light modulating device onto the phase plate on the contrary, in order to prevent the diffraction caused by the thickness of protective glass sheets from becoming effective, however, the cost and optical path length will increase as in Conventional Example 2.

Further, when the spatial light modulating device and the phase plate have the same spatial resolution, the size of elementary holograms to be recorded finally is determined depending on optical devices including the former, whereby the size of each elementary hologram is restricted.

When widening the angle of field of light reconstructed from a hologram, it is necessary for a condenser lens to decrease its NA (numerical aperture) or focal length f. Therefore, the light distribution is harder to increase while keeping a large angle of field.

Also, the size of an elementary hologram is prone to determine a lateral resolution perpendicular to a line of sight of the three-dimensional image to be reconstructed. Decreasing the aperture can reduce the lateral resolution. If the lateral resolution is higher than necessary when observing a reconstructed image from a distant observing position, for example, the number of elementary holograms will increase, thereby elongating the time required for making the hologram, thus failing to cope with the demand for making the elementary holograms larger.

(Conventional Example 4)

Japanese Patent Application Laid-Open No. HEI 11-258971 discloses a technique in which the number of point light sources is increased by passing laser light through a light integrator, so as to attain a plurality of light converging points in an elementary hologram, thereby alleviating the concentration of light.

A projected image or spatial light modulating device is disposed at the object-side focal point of the condenser. lens in Fig. 8 of Conventional Example 4. While this is assumed to be aimed at causing each of a number of light beams generated from elementary holograms to become parallel light, projected images or reconstructed images of the spatial light modulating device occur on both the front-side infinity and rear-side infinity of the elementary holograms, in which the image of the spatial light modulating device reconstructed beyond the elementary holograms also reconstructs the scattered light on the spatial light modulating device, which will be seen as unnecessary noise in the background of the three-dimensional reconstructed image.

Amethod using a projection optical system must prepare the projection optical system, thus becoming problematic in the increase in apparatus cost and the deterioration in resistance to vibration due to the fact that the optical system is greater and the optical path length becomes longer. Also, as a diffusing performance of a diffuser, a uniform diffusing performance is necessary in a minute region not greater than a pixel. If this performance is not satisfied, the diffuser screen will be reconstructed at infinity when observing the elementary holograms as mentioned above, whereby freckle-like noise known as speckle is seen, since the diffuser screen is disposed at the object-side focal plane of the condenser lens in general.

The gist of the method of Conventional Example 4 lies in that a light integrator turns a point light source into a plurality of light sources, i.e., converts a point light source into multiple point light sources such as those obtained when a point light source is seen through a kaleidoscope, thereby widening the light distribution recorded by a convolution integral (convolution) of the multiple point slight sources and the image spectrum. However, there are cases where the distribution of image spectrum is narrow, i.e., where the multiple point light sources are recorded as they are depending on the kind of images to be displayed on the spatial light modulating device. In such cases, the dynamic range of the photosensitive material may become insufficient.

**Disclosure of the Invention**

As mentioned above, the local intensity difference of the luminous flux converged on the photosensitive material is problematic in Conventional Example 1; whereas, when a diffuser is used as described in Conventional Example 2, 3, or 4 in order to correct such a problem, a displayed image of the diffuser is reconstructed at infinity, whereby freckle-like noise known as speckle is observed. In view of such an issue, it is an object of the present invention to provide a hologram making method which can reduce the noise observed in a reconstructed image.

For overcoming the above-mentioned issue, the hologram making method in accordance with the present invention is a hologram making method comprising the steps of displaying images actually or virtually observed from a plurality of viewpoints one by one in time series or simultaneously on a display surface, using the images displayed on the display surface as object light, and converging the object light with a lens to irradiate a recording surface through an aperture provided at a position corresponding to the viewpoints while irradiating the recording surface with reference light, so as to record interference light between the object light and the reference light onto the recording surface and make a hologram; wherein the distance between the display surface and the lens is set such that a real or virtual image position of the object light formed by the lens is an observing position of the hologram.

In this case, while an image displayed on the display surface is reconstructed when the hologram is irradiated with reading reference light or conjugate reference light, this image is fixed at the observing position. Therefore, even when noise exists in the reconstructed image of the display surface itself or in the reconstructed image of the projected image of the display surface, the noise itself is fixed at the observing position and thus is unremarkable as noise, thereby being reduced substantially. Setting the above-mentioned position at the above-mentioned observing position refers to setting it substantially, whereas "substantially" is assumed to mean setting within $\pm 5\%$ of the distance from the hologram to the observing position.

The display surface is a spatial light modulating device or a diffuser screen on which the image displayed on the spatial light modulating device is projected.

In the case where the display surface is a spatial light modulating device here, the spatial light modulating device modulates an incident luminous flux pixel by pixel. The modulation refers to that of intensity or polarizing direction.

Preferably, in this case, the luminous flux provided by the spatial light modulating device is diffused light emitted from a diffuser as the diffuser is irradiated with laser light, emitted from a laser light source, having a diameter enlarged by a magnification optical system. In this case, the spatial light modulating device can uniformly be illuminated by the diffuser, so as to reduce local unevenness or speckles in the spatial light modulating device image finally projected on the recording surface, while the angle of divergence of the luminous flux emitted from the diffuser can be suppressed by using the magnification optical system, whereby the efficiency of incidence of luminous flux onto the spatial light modulating device can be enhanced. Here, the diffuser is constituted by one on a par with the diffuser screen.

This diffused light finally reaches the recording surface after passing through the spatial light modulating device. The hologram making method of the present invention may comprise an imaging optical system for forming an image of diffused light onto the recording surface, whereas the imaging optical system may include the above-mentioned lens.

When the imaging optical system includes two lenses, between which a spatial light modulating device is disposed, the spatial light modulating device image is projected onto the recording surface while a magnification thereof is changed. In particular, since the magnification optical system and the diffuser improve the uniformity and efficiency in the luminous flux incident on the spatial light modulating device while reducing the angle of divergence, the uniformity of illuminance of the finally projected spatial light modulating device image on the recording surface can be maintained even when the spatial light modulating device is uniformly illuminated while maximally utilizing the diameter of the upstream-side lens on which the diverged light is incident and when the magnification is changed.

Preferably, letting $\lambda$ be the wavelength of the luminous flux emitted from the diffuser, DS be the diameter of the lens on the diffuser side in the two lenses, LS be the distance between this lens and the spatial light modulating device, $\theta$ be the angle formed between the optical axis of this lens and a segment connecting a radial end part of the lens and an end part of the spatial light modulating device, and P be the interval between pixels in the spatial light modulating device, DS and LS are set such that $\theta$ is $\sin^{-1} (\lambda/P)$ or greater. In this case, substantially all of the luminous fluxes outputted from the diffuser and the upstream-side lens can be made incident on the spatial light modulating device, so as to improve the in-plane uniformity of the luminous fluxes incident on the spatial light modulating device, thereby reducing the noise included in the reconstructed image.

**Brief Description of the Drawings**

Fig. 1 is an explanatory view of a hologram making apparatus equipped with an optical system used for making a hologram in accordance with a first embodiment;
Fig. 2 is an explanatory view of a hologram making apparatus equipped with an optical system used for making a hologram in accordance with a second embodiment;
Fig. 3 is an explanatory view of a hologram making apparatus equipped with an optical system used for making a hologram in accordance with a third embodiment;
Fig. 4 is an explanatory view of a hologram making apparatus equipped with an optical system used for making a hologram in accordance with a fourth embodiment;

Fig. 5 is an explanatory view of a hologram making apparatus equipped with an optical system used for making a hologram in accordance with a fifth embodiment;

Fig. 6 is an explanatory view for explaining an incident angle condition of diffused illumination light;

Fig. 7 is an explanatory view of a hologram making apparatus equipped with an optical system used for making a hologram in accordance with a sixth embodiment; and

Fig. 8 is a diagram of a two-dimensional hologram making apparatus in accordance with a conventional technique.

**Best Modes for Carrying Out the Invention**

In the following, a hologram making method in accordance with embodiments of the present invention will be explained. Constituents identical to each other will be referred to with numerals or letters identical to each other without repeating their overlapping descriptions.

(First Embodiment)

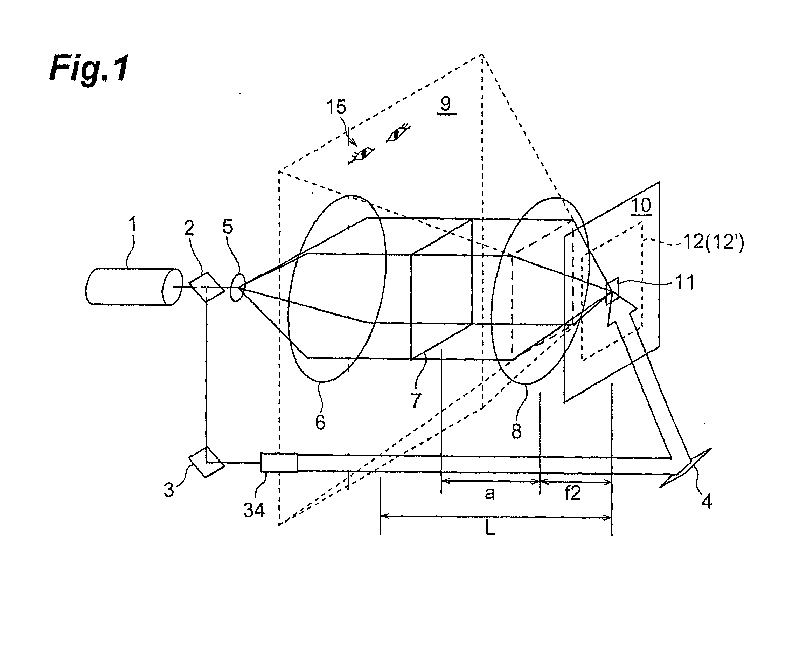

Fig. 1 is an explanatory view of a hologram making apparatus equipped with an optical system in the case where an image of a spatial light modulating device is turned into a virtual image, whereas a viewpoint is placed at the virtual image position. This will be explained in detail in the following.

This apparatus comprises a laser light source (coherent light source; semiconductor laser) 1 emitting a laser beam having a single wavelength, and a half mirror 2 for splitting the laser beam emitted from the laser light source 1. The laser beams split by the half mirror 2 pass through (i) an object light irradiation optical system and (ii) a reference light irradiation optical system, thereby irradiating the surface (front face) and rear face of a photosensitive material 12, respectively.

(i) Object Light Irradiation Optical System

The object light irradiation optical system comprises a beam expander composed of lenses 5 and 6 arranged such that the light passed through the half mirror 2 is incident thereon as a principal ray, a spatial light modulating device 7 to be irradiated with a plane wave having its luminous flux diameter enlarged by the beam expander, and a condenser lens (condenser optical system) 8 on which the light passed through the spatial light modulating device 7 (spatial light modulating device image) is incident, whereas the object light emitted from the condenser lens 8 is made incident on the front face of the photosensitive material 12. In the following explanation, all of the lenses are convex lenses.

The spatial light modulating device 7 is a spatial light modulator of electric address type, which is constituted by a liquid crystal display or the like and transmits therethrough a plane wave of light incident thereon while changing the intensity (amplitude) thereof pixel by pixel. The displayed image of the spatial light modulating device 7, i.e., the output light image from the spatial light modulating device 7, can be changed by altering the transmittance of each pixel, whereas this displayed image is an object image obtained when an object is observed from one viewpoint 15. Therefore, in this example, a displayed image observed from one viewpoint 15 by way of the condenser lens 8 irradiates the photosensitive material 12 as the object light.

(ii) Reference Light Irradiation Optical System

The reference light irradiation optical system comprises a group of planar reflecting mirrors 3, 4 for further reflecting the reflected light from the half mirror 2 toward the rear side of the photosensitive material 12, and a beam expander 34 interposed within the resulting optical path, whereas the rear face of the photosensitive material 12 is tilted with respect to the incident direction of reference light. Though not depicted so as to keep the drawing from getting complicated, the beam is not used as it is but its wavefront is shaped by an afocal lens system or spatial filter for turning it into parallel light as with the object light. The front face of the photosensitive material 12 is perpendicular to the optical axis of the condenser lens 8, whereby the principal ray (object light) of the light incident on the condenser lens 8 is perpendicularly incident on the photosensitive material 12.

Therefore, on the same area of the photosensitive material 12, the object light is perpendicularly incident from the front face side, and the reference light is obliquely incident from the rear side. As a consequence, a so-called Lippmann type elementary hologram is exposed to light in a minute area within the photosensitive material 12. Specifically, the photosensitive material 12 is heldbetween two mask plates 10 having an aperture 11 only in the minute area, whereby interference fringes generated by the impingement of object light and reference light are recorded within the minute area of the photosensitive material 12. Here, the photosensitive material 12 is formed by coating a transparent glass sheet with a silver halide emulsion, whereas other examples of the emulsion include sensitive materials for holograms such as dichromated gelatin. Also usable are polymer materials such as photopolymers.

In this example, while respective images observed from a plurality of viewpoints are displayed one by one on the spatial light modulating device 7, the elementary holograms are recorded (exposed to light) at the respective positions of the photosensitive material 12 corresponding to the individual viewpoint positions. Namely, letting x and y axes be two axes defining a plane perpendicular to the optical axis of the lens 8, the photosensitive material 12 is moved along the x and y axes for each of the displayed images, so as to change the recording positions of elementary holograms. As a consequence, a plurality of elementary holograms are arranged into a matrix on the photosensitive material 12.

When the photosensitive material 12 is developed, a hologram (referred to as 12') in which a plurality of Lippmann type elementary holograms whose transmittance and/or phase varies depending on the intensity of interference fringes irradiating the minute area are formed is produced. This hologram 12' is a holographic stereogram in which a plurality of images actually observing an object from a plurality of viewpoints or a plurality of images (computer graphics) calculated by a computer so as to appear to be virtually observed are recorded on a single photosensitive material 12 in conformity to the above-mentioned viewpoints. Also, this hologram 12' is a Lippmann type hologram and functions as a multilayer film interference filter exhibiting a reflectance with respect to only a specific wavelength.

When conjugate light reconstruction is carried out by using conjugate reference light incident in a direction opposite from that of the reference light as light for reconstructing the hologram 12' while removing the optical systems such as the lens 8, the reconstruction light for illuminating the elementary holograms is converted into conjugate object light having a wavefront conjugate with that of the object light, whereby the recorded spatial light modulating device image is reconstructed.

Here, the angle of field will be explained. For achieving natural observations, the angle of field is preferably wider so as to allow viewing from any place. Letting N be the number of modulating elements (pixels) of the spatial light modulating device 7, P be the interval between the modulating elements, and f be the focal length of the condenser lens 8, the angle of field $\theta e$ is given by expression (1):

$$(\text{Expression (1)})$$

$$\text{angle of field } \theta e = 2 \times \tan^{-1}((N/2)P/f)$$

However, when light is converged by the spatial light modulating device 7 and condenser lens 8 alone without using the diffuser or phase plate, the size D of elementary hologram is given by the following expression (2):

$$(\text{Expression (2)})$$

$$\text{size of elementary hologram } D = \lambda f/P$$

where the wavelength of the light source 1 is $\lambda$.

Since the size of elementary hologram indicates the lateral resolution of a three-dimensional reconstructed image, the elementary hologram is preferably smaller. Normally, at an observation distance of 30 cm from an elementary hologram, the elementary hologram is not greater than the resolution of eyes if its size is 0.3 mm or smaller, whereby three-dimensional reconstructed images can be observed without any sense of discomfort. Therefore, both greater angle of field and smaller elementary hologram can easily be satisfied when a condenser lens having a small numerical aperture NA or shorter focal length is used.

When the observation distance is made longer, e.g., 2 m to 10 m, so as to make a large hologram covering a whole wall face, for example, the size of the above-mentioned elementary hologram is so small that the number of elementary holograms to be recorded becomes too large. In this case, the focal length is made longer than that in expression (2), or a spatial light modulating device having a smaller modulating element interval is chosen.

Here, a case where the spatial light modulating device 7 is disposed on the lens 8 side from the object-side focal position of the lens 8 will be considered. Namely, this is a case where a < f2, where f2 is the focal length of the lens 8, and a is t. In this case, at the time of making the hologram 12', the light image emitted from the spatial light modulating device 7 does not form an image on the photosensitive material 12 even after passing through the lens 8, whereby the object lens passed through the lens 8 is equivalent to divergent light from a spatial light modulating device image (referred to as virtual image) 9 virtually placed at a position (referred to as virtual image position and indicated by the distance L from the hologram 12' (photosensitive material 12)) on the light source side from the object-side focal position.

At this time, the distance a between the spatial light modulating device 7 and the lens 8 is determined such that an observing viewpoint 15 is placed at the virtual image position L. When this hologram (12') is irradiated with the conjugate reference light acting as reconstruction light, the part of reconstruction light reflected and diffracted by the hologram corresponds to the above-mentioned superposed parallax image, which can be observed from the virtual image position L side. Since the position of the three-dimensional reconstructed image is prone to blur as it is distanced farther from the photosensitive material 12 due to the wavelength selectivity of the photosensitive material 12, the parallax image is preferably made so as to be located near the photosensitive material 12.

Here, the distance L, the enlarging magnification M at the time of converting the spatial light modulating device 7 into the virtual image 9, and the displayed image of the spatial light modulating device 7 will be explained in brief.

The distance L and enlarging magnitude M are given by the following expressions:

(Expression (3))

$$\text{distance } L = f2 \times a/(f2-a) + f2$$

(Expression (4))

$$\text{enlarging magnification } M = f2/(f2-a)$$

Here, letting P be the pixel pitch of the spatial light modulating device 7, the longitudinal and lateral resolution of the virtual image of the spatial light modulating device becomes $M \times P$. If $M \times P$ < pupil diameter of about 3 mm is satisfied, the number of light beams incident on the pupil 15 from one elementary hologram becomes plural, so that dropouts in pixels will be unremarkable if any, and viewpoints will change in conformity to a smooth three-dimensional reconstructed image. While scattered light from the surface of the spatial light modulating device 7 often appears as noise in the background of object reconstruction, the noise is restrained from affecting the object reconstructed image if the viewpoint 15 and the virtual image of the spatial light modulating device 7 substantially coincide with each other.

A two-dimensional image to be transferred to the spatial light modulating device 7 from the three-dimensional object as an object is calculated by perspective transformation assuming the viewpoint to be positioned at the elementary hologram. Namely, when the three-dimensional object is expressed by a world coordinate system (xw, yw, zw), and the elementary hologram is positioned at (x, y, 0) on the world coordinate system, the position of the three-dimensional object is transformed into coordinates (xh, yh) on the spatial light modulating device 7 as represented by the following expressions:

(Expression (5))

$$xh = f2 \times (xw-x)/z$$

(Expression (6))

$$yh = f2 \times (yw-y)/z$$

Specifically, luminance information and color information of (xw, yw, zw) are transferred to the coordinates (xh, yh), whereby thus calculated two-dimensional image is displayed on the spatial light modulating device 7. Here, when a plurality of information items overlap at the same (xh, yh) coordinates, their zw values are compared with each other so as to choose one closer to the virtual image 9 of the spatial light modulating device 7 in many cases in order for the virtual image 9 of the spatial light modulating device 7 to be disposed closer to the observer.

The case where the spatial light modulating device 7 is disposed on the light source side from the object-side focal position of the lens 8 will now be explained.

(Second Embodiment)

Fig. 2 is an explanatory view of a hologram making apparatus equipped with an optical system for turning an image of a spatial light modulating device into a real image while placing the viewpoint at the real image position. This apparatus is the same as that of the first embodiment except that the spatial light modulating device 7 is disposed on the light source side from the object-side focal position of the lens 8. In the same process as that mentioned above, a hologram 12' is made from a photosensitive material 12 in this example.

In the case where a > f2 explained in this example, the light image emitted from the spatial light modulating device 7 at the time of making the hologram 12' inherently forms an image at a position (referred to as real image position and indicated by the distance L' from the hologram 12' (photosensitive material 12)) farther distanced from the lens 8 than the image-side focal position of the lens by passing through the lens 8. Namely, the object light emitted from the lens 8 is a spatial light modulating device image (referred to as real image) 9' to be formed at the real image position L'.

When reconstruction is carried out by using reconstruction light incident in the direction identical to that of the reference light as light for reconstructing the hologram 12' while removing the optical systems such as the lens 8, as in the above-mentioned embodiment, the reconstruction light illuminating the elementary holograms is transformed so as to have a wavefront identical to that of the object light, whereby the spatial light modulating device image is reconstructed.

At the time of making the hologram 12', the real image to be focused (converged) at the real image position L' is recorded in each elementary hologram, whereby a real image of the spatial light modulating device image corresponding to each elementary hologram is reconstructed at the real image position L'. Since a plurality of elementary holograms are recorded on the hologram 12' according to viewpoints, so that their real images overlap at the time of reconstruction light irradiation, whereby images (real images) with parallaxes observed from a plurality of viewpoints are reconstructed at the real image position L' in a superposing manner.

At this time, the distance a between the spatial light modulating device 7 and the lens 8 is determined such that the observing viewpoint 15 is placed at the real image position L'. When this hologram (12') is irradiated with the reference light acting as reconstruction light, the part of reconstruction light reflected and diffracted by the hologram corresponds to the above-mentioned superposed parallax image, which can be observed from the real image position L' side. Since the position of the three-dimensional reconstructed image is prone to blur as it is distanced farther from the photosensitive material 12 due to the wavelength selectivity of the photosensitive material 12, the parallax image is preferably made so as to be located near the photosensitive material 12.

The distance L' is given by the following expressions:

$$\text{(Expression (7))}$$

$$\text{distance } L' = f2 \times a/(a\text{-}f2)\text{-}f2$$

whereas the magnitude, perspective transform, and the like are provided by the above-mentioned expressions (4) to (6).

At the time of preparing the hologram, the spatial light modulating device image may be projected onto a diffuser screen, which is arranged at the same position as the spatial light modulating device 7 described in the above-mentioned first or second embodiment. Though no particular explanation seems to be necessary in such a case, an embodiment applying the diffuser screen to the first embodiment will be explained by way of example in the following:

(Third Embodiment)

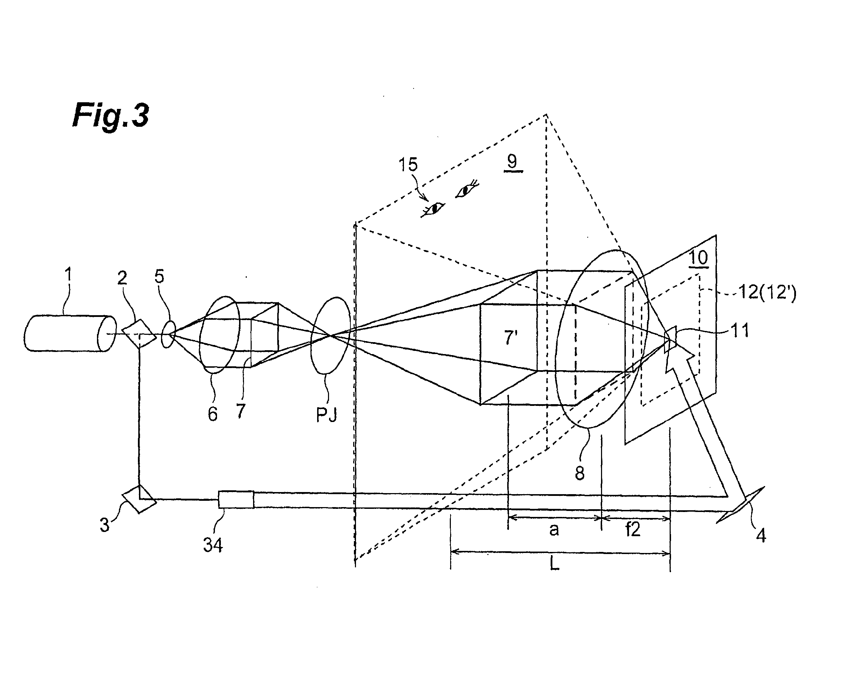

Fig. 3 is an explanatory view of a hologram making apparatus equipped with an optical system in the case where an image of a spatial light modulating device 7 is projected onto a diffuser screen', and thus projected image is turned into a virtual image, whereas a viewpoint is placed at the virtual image position. In the apparatus in accordance with this embodiment, the diffuser screen 7' is disposed at the position of the spatial light modulating device 7 in accordance with the first embodiment. This apparatus is configured such that the object light emitted from the spatial light modulating device 7 illuminated by a beam expander 5, 6 is projected onto the diffuser screen 7' by way of an imaging lens PJ, in which the diffuser screen 7' acts like the spatial light modulating device 7 described in the first embodiment. Namely, in this example, the spatial light modulating device 7 in the first embodiment is read as the diffuser screen 7'.

Since the spatial light modulating device 7 is projected under magnification, however, the resolution of the virtual image of the projected image on the diffuser screen and the displayed image of the spatial light modulating device 7 are different from those in the first embodiment.

Namely, letting P be the pitch of the spatial light modulating device 7, and MT be the magnification at which the spatial light modulating device 7 is projected onto the screen 7', the longitudinal and lateral resolution of the virtual image 9 is $M \times P \times MT$. If $M \times P \times MT <$ pupil diameter is satisfied, the number of light beams incident on the pupil from one elementary hologrambecomes plural, so that dropouts in pixels will be unremarkable if any, and viewpoints will change in conformity to a smooth three-dimensional reconstructed image. Though freckle patterns known as speckles are likely to be superposed on the projected image and visible as noise in the background of object reconstruction in particular when a diffuser screen is used, they will not affect the reconstructed object image if the viewpoint 15 and the virtual image of the diffuser screen substantially coincide with each other.

In terms of which is reconstructed by elementary holograms recorded in the photosensitive material 12, an image of the spatial light modulating device 7 is reconstructed when neither diffuser nor phase plate is used, whereas two kinds of images, i.e., an image of a diffuser or phase plate and an image of the spatial light modulating device 7, are reconstructed when the diffuser or phase plate is used. In other words, what the elementary holograms reconstruct is a group of light beams connecting the elementary holograms and the respective modulating elements (pixels) of the spatial light modulating device 7, whereas the diffuser and phase plate form images on extensions of these light beams.

Therefore, when the position of the diffuser or phase plate is located closer to the back side or front side of the three-dimensional reconstructed image, it may overlap the three-dimensional reconstructed image, deteriorate the contrast, and so forth, thus becoming adversely influential. Hence, the reconstructed image of the diffuser or phase plate is preferably disposed at the position of elementary holograms which are light beam generating sources, or behind the observer or at front-side infinity thereof. At the same time, the spatial light modulating device 7 is located at the position of the observer or behind the observer.

Further, in terms of what is written in elementary holograms when neither diffuser nor phase plate is used, light at the position of elementary holograms is a convolution integral of the spectrum of the image displayed on the spatial light modulating device 7 and the light source 1. In the case where the luminous flux from the light source 1 is transmitted through a spatial filter, it can be regarded as a point light source at the position of the spatial filter and considered a delta function.

Therefore, the light distribution at the position of elementary holograms is a convolution integral of an image spectrum and a delta function, which becomes an image spectrum itself. The case where the dynamic range of the photosensitive material 12 in elementary holograms becomes insufficient occurs when recording an image containing a greater amount of components having such a low spatial frequency that the image spectrum does not widen. In this example, the diffuser screen 7' is provided so as to widen the image spectrum, thereby increasing components with a higher spatial frequency.

A two-dimensional image to be transferred to the spatial light modulating device 7 from the three-dimensional object to be displayed is prepared by perspective transformation assuming the viewpoint to be positioned at the elementary hologram. More specifically, the position of the three-dimensional object is converted into coordinates (xh, yh) on the spatial light modulating device 7 as represented by the following expressions:

(Expression (8))

$$xh = -f2 \times (xw - x)/(zw \times MT)$$

(Expression (9))

$$yh = -f2 \times (yw - y)/(zw \times MT)$$

Specifically, as in the above-mentioned embodiment, luminance information and color information of (xw, yw, zw) are transferred to the coordinates (xh, yh), whereby thus calculated two-dimensional image is displayed on the spatial light modulating device 7. Here, when a plurality of information items overlap at the same (xh, yh) coordinates, their zw values are compared with each other so as to choose one closer to the virtual image of the diffuser screen in many cases in order for the virtual image of the spatial light modulating device to be disposed closer to the observer.

An embodiment applying the diffuser screen to the second embodiment will be explained by way of example in the following:

(Fourth Embodiment)

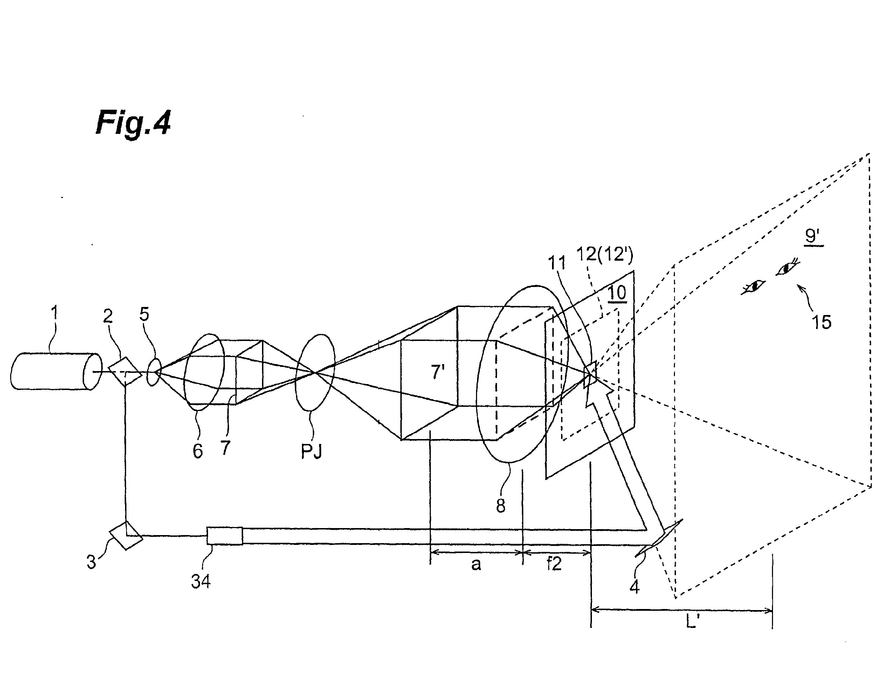

Fig. 4 is an explanatory view of a hologram making apparatus equipped with an optical system in the case where an image of a spatial light modulating device 7 is projected onto a diffuser screen 7', and thus projected image is turned into a real image, whereas a viewpoint is placed at the real image position. In the apparatus in accordance with this embodiment, the diffuser screen 7' is disposed at the position of the spatial light modulating device 7 in accordance with the second embodiment. This apparatus is configured such that the object light emitted from the spatial light modulating device 7 illuminated by a beam expander 5, 6 is projected onto the diffuser screen 7' by way of an imaging lens PJ, in which the diffuser screen 7' acts like the spatial light modulating device 7 described in the second embodiment. The other part of configuration is identical to that of the second embodiment in terms of making and reconstructing the real image as well. Namely, in this example, the spatial light modulating device 7 in the first embodiment is read as the diffuser screen 7'. Relationships of magnification, perspective transformation, and the like are identical to those in the above-mentioned third embodiment.

Explained in the following is an embodiment in which a spatial light modulating device 7 is illuminated with a diffusion surface light source so as to improve the evenness in the light distribution of elementary holograms and the variability in their size, there by making the observing point substantially coincide with the position for reconstructing the virtual image of the spatial light modulating device 7.

(Fifth Embodiment)

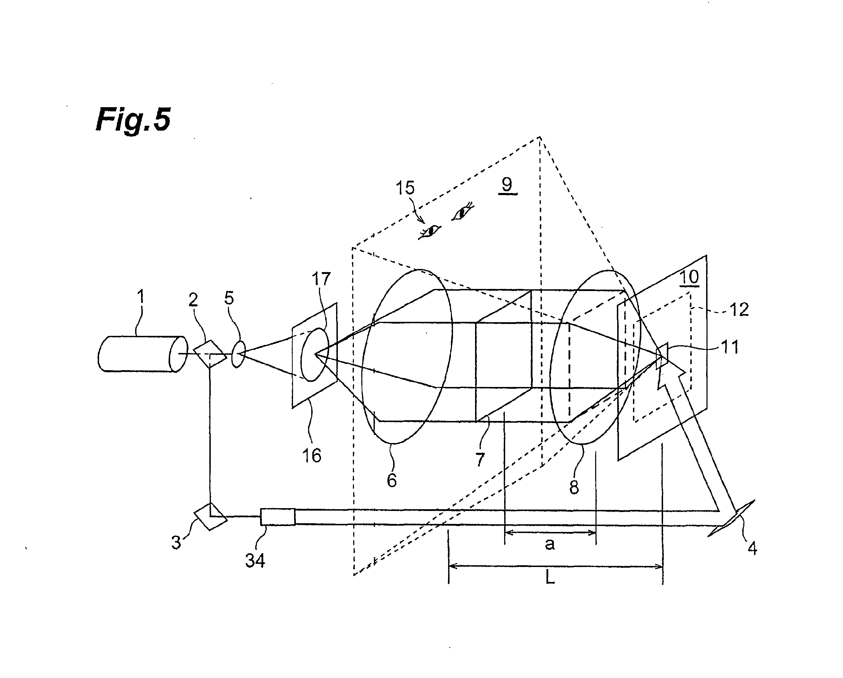

Fig. 5 is an explanatory view of a hologram making apparatus equipped with an optical system for illuminating the spatial light modulating device with a diffusion surface light source 17. This embodiment differs from the first embodiment in that a light beam from a laser light source 1 is enlarged by a lens 5 so as to irradiate a diffuser 16, thereby generating a new light source functioning as the diffusion light source 17 on the diffuser 16, whereas the diffused light emitted from the diffuser surface light source 17 is converged by a lens 6 and then irradiates the spatial light modulating device 7, and the diffused light modulated by the spatial light modulating device 7, i.e., a spatial light modulating device image, is converged by a lens 8 so as to form an image on the photosensitive material 12.

The lenses 6 and 8 are connected in tandem, whereas the spatial light modulating device 7 is interposed therebetween. The position of the surface of the photosensitive material 12 is not restricted to the image-side focal plane position of the downstream-side lens 8. The other part of optical arrangement is similar to that of the first embodiment.

First, the case with an afocal lens system 6, 8 corresponding to a special example of the tandem lens system 6, 8 will be considered. The afocal lens system refers to an afocal optical system which emits a parallel luminous flux when a parallel luminous flux is made incident on a lens thereof, and is used for a beam expander and the like.

In the afocal lens system, the diffusion surface light source 17 is disposed at the object-side focal plane of the lens 6, the image-side focal plane of the lens 6 coincides with the object-side focal plane of the lens 8, and the photosensitive material 12 is positioned at the image-side focal plane of the lens 8. Letting f1 be the focal length of the upstream-side lens 6, f2 be the focal length of the downstream-side lens 8, and Ms be the light source imaging magnification, Ms is given by the following expression (10) :

(Expression (10))

light source imaging magnification $Ms = f2/f1$

In this case, the diffusion surface light source 17 forms an image on the surface of the photosensitive material 12, whereas the size of the image on the photosensitive material 12 is given by the size of the diffusion light source 17 multiplied by Ms if the restriction caused by the lens pupil is neglected.

Therefore, the size of elementary holograms can be set by an aperture 11 of a mask plate 10 up to the size indicated by expression (10). On the other hand, the distance L, the enlarging magnification M, and the position of the three-dimensional object are given by expressions (4) to (6).

In the case of a typical tandem lens system, letting f be the composite focal length of the two lenses 6, 8, d be the distance between the two lenses 6, 8, and S2 be the distance from the second lens 8 to the image-side focal point of the composite lens 6, 8, the imaging position of the diffusion surface light source 17 and its imaging magnification can be determined by using the following expressions (11) and (12):

(Expression (11))

composite focal length $f = f1 \times f2/(f1+f2-d)$

(Expression (12))

distance $S2 = f2 \times (f1-d)/(f1+f2-d)$

With reference to the position of the second lens 8, the distance d' to the composite lens 6, 8 is given by the following expression (13). Here, each distance between individual elements is the distance between their centers.

(Expression (13))

distance $d' = f\text{-}S2$

Letting A be the distance from the composite lenses 6, 8 to the diffusion light source 17, B be the distance from the composite lens 6, 8 to the diffusion light source 17, A" be the distance from the second lens 8 to the imaging point of the diffusion light source 17, and B" be the distance from the second lens 8 to the imaging point of the diffusion light source 17, the distances A and B satisfy the following expressions (14) and (15):

(Expression (14))

distance $A = A'' - (f - S2)$

(Expression (15))

distance $B = f \times A/(A\text{-}f) = f[A''\text{-}(f\text{-}S2)]/(A''\text{-}2 \times f + S2)$

Therefore, the imaging position B" of the diffusion light source when the latter is positioned at A", and the imaging magnification M of the diffusion light source at this time are given by the following expressions (16) and (17) by using A", f, and S2:

(Expression (16))

imaging position

$B'' = B\text{-}(f\text{-}S2) = f[A''\text{-}(f\text{-}S2)]/(A''\text{-}s \times f + S2)(f\text{-}S2)$

(Expression (17))

imaging magnification $M = B/A = f/(A''\text{-}2 \times f + S2)$

Here, the luminous flux irradiating the spatial light modulating device 7 is diffused light, whereby freckle patterns known as speckles are superposed on the surface of the spatial light modulating device 7. If the average diameter of the speckles is greater than the modulating element (pixel) interval P of the spatial light modulating device 7, the freckle patterns are also superposed on the virtual image 9 of the spatial light modulating device 7 reconstructed from the elementary holograms. If the size of freckle patterns is greater than the pupil diameter, no light will be incident on the viewpoint 15, whereby the elementary holograms will be hard to see from the viewpoint 15. Therefore, it is necessary for the speckle diameter on the spatial light modulating device 7 to be made as small as possible.

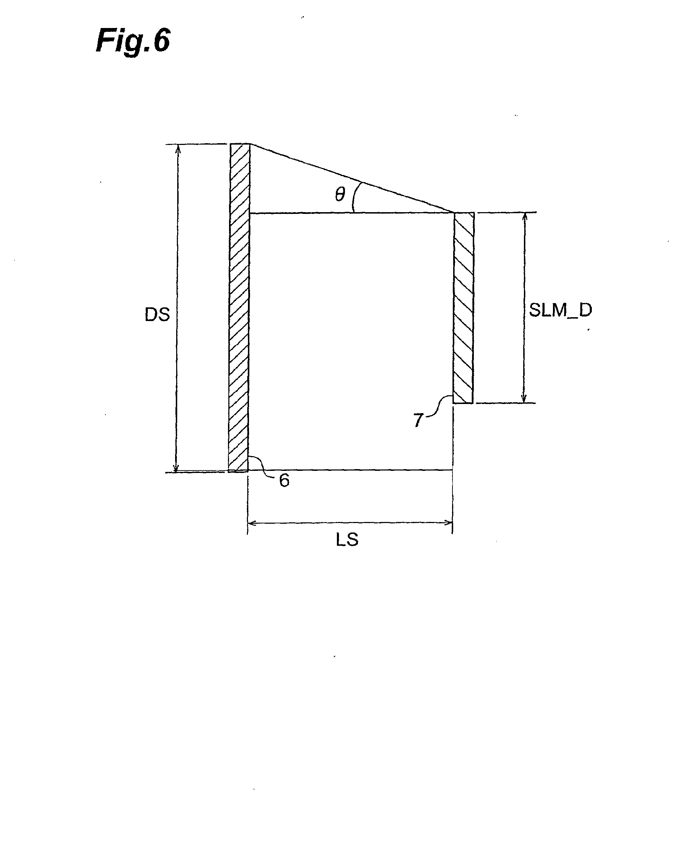

Fig. 6 is an explanatory view for explaining an incident angle condition of diffused illumination light. The average diameter $\delta$ and maximum incident angle $\theta m$ of speckles are given by the following expressions (18) and (19), assuming that LS is the distance between the lens 6 and the spatial light modulating device 7. The maximum incident angle $\theta m$ is the maximum value of angle $\theta$, whereas the angle $\theta$ is the angle formed between the optical axis from the spatial light modulating device 7 to the lens 6 and a plane overhanging from an end point of the spatial light modulating device 7 to the effective diameter DS of the lens 6. The pupil of the lens 6 can also be regarded as a second diffusion surface light source:

(Expression (18))

speckle average diameter $\delta = 1.2 \times \lambda \times LS(DS\text{-}SLM\#D) < P$

(Expression (19))

$$\text{maximum incident angle } \theta m = \tan^{-1}[(DS\text{-}SLM\#D/2)/LS]$$

By way of example, the numeric values are such that, when LS = 10 cm and λ = 0.6 μm with respect to P > δ = 26 μm, DS > 29.54 mm and θm = 1.67°. When set so as to decrease the speckle average diameter δ by one digit, DS > 54.3 mm and θm = 16.28° with respect to δ = 2.6 μm.

Alternatively, taking account of the interference between two luminous fluxes having the modulating element interval (pixel interval) P of the spatial light modulating device 7 according to the concept of interference, the incident angle θ onto the spatial light modulating device 7, i.e., the angle of divergence (half angle value) of incident light as seen from one pixel side is approximated by the following expression (20):

(Expression (20))

$$\text{incident angle } \theta = \sin^{-1}(\lambda/P)$$

An example of this value is such that θ = 1.32° with respect to P = 26 μm and λ = 0.6 μm.

In Fig. 6, tanθ is given by the following expression (21):

(Expression (21))

$$\tan\theta=((DS\text{-}SLM\#D/2))/LS$$

For satisfying expressions (20) and (21), DS = 31.2 mm, thus being a value milder than the result of expressions (18) and (19). Therefore, it is necessary to prepare a second diffusion surface light source providing the angle of expression (20) or preferably greater. Namely, when the diameter DS of the upstream-side lens 6 is made greater, luminous fluxes are made incident on pixels located at end parts of the spatial light modulating device 7 as with the pixels located at the center thereof. Therefore, the lens 6 is caused to have a diameter of DS or greater, and diffused light is made incident thereon within this diameter.

In Fig. 5, the lens 5 regulates the laser beam so as to enlarge it and reduce its angle of divergence. Specifically, the focal length of the lens 5 is made shorter, so as to diverge the beam passing therethrough and irradiate the diffuser with the divergent beam, thereby generating a second diffusion surface light source having a diameter of DS or greater on the surface of the upstream-side lens 6.

If the spatial light modulating device 7 is disposed at the object-side focal plane of the lens 8 as conventionally done when irradiating the spatial light modulating device 7 with this diffused illumination light, the spatial light modulating device 7 may not be illuminated uniformly but in a freckle pattern due to the unevenness of speckles. In this case, at the time of reconstructing the hologram, the freckle pattern appears in the reconstructed image of the spatial light modulating device 7, and is seen as noise in the background of the three-dimensional reconstructed object image.

In this example, however, the spatial light modulating device 7 is positioned closer to the downstream-side convex lens 8, so as to reconstruct the virtual image of the spatial light modulating device 7, and its reconstructed image can substantially coincide with the observing point, whereby noise can be prevented from becoming remarkable.

The following are actually used values:

(spatial light modulating device 7) manufacturer: SONY Corp., catalog number: LCX023AL, pixel interval (pitch) : 26 μm, number of pixels: 1024 × 768 , (diffusion surface light source 17) diameter 1.5 cm, (lens 6) F value: F1.2, focal length f: 50 mm, effective diameter: 35.7 mm. Here, the lens 6 and the spatial light modulating device 7 were made with an interval of 6 mm therebetween and a speckle average diameter δ of 0.5 μm. When elementary holograms were observed from a viewpoint located at the reconstructed image of the spatial light modulating device 7 from the elementary holograms, there were no cases where the elementary holograms could not be seen.

Explained in the following is an embodiment in which a spatial light modulating device is illuminated with a diffusion surface light source in the case of real image reconstruction, so as to improve the evenness in the light distribution of elementary holograms and the variability in their size, thereby making the observing point substantially coincide with the real image position of the spatial light modulating device.

(Sixth Embodiment)

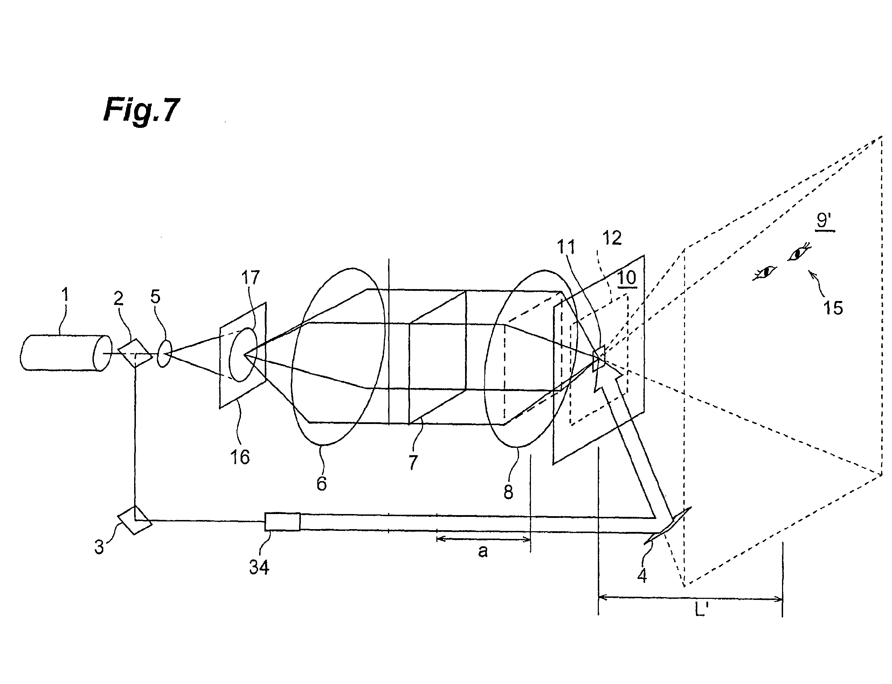

Fig. 7 is an explanatory view of a hologram making apparatus equipped with an optical system for illuminating a spatial light modulating device with a diffusion surface light source. This embodiment differs from the second embodiment in that the beam from the laser light source 1 is enlarged by the lens 5 so as to irradiate the diffuser 16, so that the diffusion surface light source is employed as a new light source and then is caused to form an image on the photosensitive material 12 by use of the lenses 6 and 8 arranged in tandem, and that the photosensitive material surface is not restricted to the image-side focal plane of the lens 8. The other part of optical arrangement is similar to that in the second embodiment.

As in the fifth embodiment, in the afocal lens system, the distance L' is similar to expression (7), the enlarging magnification M and the position of the three-dimensional object are similar to expressions (4) to (6), and the light source imaging magnification is similar to expression (10). In a typical tandem lens system, the imaging position of the diffusion surface light source and its magnification are determined from expressions (11) and (12) in a similar manner. Similarly, the lens 5 is used for enlarging the laser beam so as to control its angle of divergence, thereby coping with the aimed object.

As explained in the foregoing, even when noise exists in the reconstructed image of the spatial light modulating device 7 itself or in the reconstructed image of the projected image of the spatial light modulating device 7, the noise itself is substantially fixed at the observing position and thus is unremarkable as noise in the above-mentioned hologram making method. Also, since a tandem lens system is used, there is a degree of freedom in the arranging position of the photosensitive material 12 and the imaging magnification, so that the size of light distribution determined by the resolution of the spatial light modulating device 7, the wavelength, and the focal length of the light-collecting device 8 can be made variable in a greater range. Therefore, the light distribution can be widened regardless of the kind of image represented on the spatial light modulating device 7, so as to be restrained from exceeding the dynamic range of the photosensitive material 12.

Though parallax images are displayed on the display surface 7, 7' one by one in time series, a plurality of spatially-divided parallax images may be displayed at the same time and projected onto a plurality of apertures provided on the recording surface 12 so as to correspond to the viewpoints. In the latter case, light-shielding walls are provided between the plurality of apertures so as to suppress the interference between the individual parallax images on the recording surface 12.

When the foregoing hologram making method is summarized, the hologram making method in accordance with the first to sixth embodiments is a hologram making method comprising the steps of displaying images actually or virtually observed from a plurality of viewpoints one by one in time series or simultaneously on a display surface 7, 7', using the images displayed on the display surface 7, 7' as object light, and converging the object light with a lens 8 to irradiate a recording surface 12 through an aperture 11 provided at a position corresponding to the viewpoints while irradiating the recording surface 12 with reference light, so as to record interference light between the object light and the reference light onto the recording surface 12 and make a hologram 12'; wherein the distance (L, L') between the display surface 7, 7' and the lens 8 is set such that a real or virtual image position 9, 9' of the object light formed by the lens 8 is an observing position of the hologram 12'.

In this case, the reconstructed image of the spatial light modulating device 7 itself or the reconstructed image of the image represented on the spatial light modulating device 7 projected onto the diffuser screen 7' is formed. However, such an image is fixed at the observing position L, L', so that the noise existing in the reconstructed image of the spatial light modulating device 7' itself or in the reconstructed image of the projected image of the spatial light modulating device 7' if any is unremarkable since the noise itself is fixed at the observing position, whereby the noise is essentially lowered.

Setting the above-mentioned position at the above-mentioned observing position refers to setting it substantially, whereas "substantially" is assumed to mean setting within $\pm 5\%$ of the distance from the hologram 12' to the observing position.

The display surface 7, 7' is the spatial light modulating device 7 or diffuser screen 7' on which the image displayed on the spatial light modulating device 7 is projected.

In the case where the display surface is the spatial light modulating device 7 here, the spatial light modulating device 7 modulates an incident luminous flux pixel by pixel. The modulation refers to that of intensity or polarizing direction.

Preferably, in the fifth and sixth embodiments, the luminous flux provided by the spatial light modulating device 7 is diffused light emitted from the diffuser 16 as the diffuser 16 is irradiated with laser light, emitted from the laser light source 1, having a diameter enlarged by the magnification optical system 5.

In this case, the spatial light modulating device 7 can uniformly be illuminated by the diffuser 16, so as to reduce local unevenness or speckles in the spatial light modulating device image finally projected on the recording surface 12, while the angle of divergence of the luminous flux emitted from the diffuser 16 can be suppressed by using the magnification optical system 5, whereby the efficiency of incidence of luminous flux onto the spatial light modulating device 7 can be enhanced. Here, the diffuser 16 is constituted by one on a par with the diffuser screen 7'.

In this case, only a part of the luminous flux emitted from the lens 8 passes through the aperture 11.

According to the above-mentioned hologram making method, the size of light distribution determined by the resolution of the spatial light modulating device 7, the wavelength, and the focal length of the light-collecting device can be made variable in a greater range.

Though the diffused light finally reaches the recording surface 12 after passing through the spatial light modulating device 7, the above-mentioned hologram making method comprises the imaging optical system 6, 8 for forming an image of the diffused light onto the recording surface 12, whereas this imaging optical system may include the above-mentioned lens 8.

The imaging optical system 6, 8 includes two lenses 6, 8 opposing each other. When the spatial light modulating device 7 is disposed between these two lenses, the spatial light modulating device image is projected onto the recording surface 12 with its magnification being changed by the two lenses 6, 8. In particular, since the magnification optical system 5 and the diffuser 16 improve the uniformity and efficiency in the luminous flux incident on the spatial light modulating device 7 while reducing the angle of divergence, the uniformity of illuminance of the finally projected spatial light modulating device image on the recording surface 12 can be maintained even when the spatial light modulating device 7 is uniformly illuminated while maximally utilizing the diameter of the upstream-side lens 6 on which the diverged light is incident and when the magnification is changed.

When the imaging optical system 6, 8 forms an elementary hologram at the imaging position of the diffusion surface light source 17, a light distribution which is a convolution integral of the diffusion surface light source 17 and the spectrum of the spatial light modulating device 7 is written with respect to the elementary hologram on the recording surface 12, so that the light distribution is sufficiently widened, whereby the light distribution of object light can be set so as to fall within the dynamic range of the photosensitive material 12 regardless of the kind of images represented on the spatial light modulating device 7.

The imaging optical system 6, 8 for the diffusion light source surface 17 is a lens system arranging two convex lenses 6, 8 in tandem. When the spatial light modulating device 7 is disposed at the image-side focal plane of the upstream-side convex lens 6 whereas the object-side focal plane of the downstream-side convex lens 8 is disposed at the spatial light modulating device 7, a degree of freedom occurs in the arrangement of the spatial light modulating device 7 and two convex lenses 6, 8 unlike afocal lens systems. Therefore, a degree of freedom occurs in the imaging position of the diffusion surface light source 17, i.e., the arranging position of the photosensitive material 12, and the imaging magnification.

Preferably, letting $\lambda$ be the wavelength of the luminous flux emitted from the diffuser 16, DS be the diameter of the lens 6 on the diffuser 16 side in the two lenses, LS be the distance between this lens and the spatial light modulating device 7, $\theta$ be the angle formed between the optical axis of this lens 6 and a segment connecting a radial end part of the lens 6 and an end part of the spatial light modulating device 7, and P be the interval between pixels in the spatial light modulating device 7, DS and LS are set such that $\theta$ is $\sin^{-1} (\lambda/P)$ or greater. In this case, substantially all of the luminous fluxes outputted from the diffuser 16 and the upstream-side lens 6 can be made incident on the spatial light modulating device 7, so as to improve the in-plane uniformity of the luminous fluxes incident on the spatial light modulating device 7, thereby reducing the noise included in the reconstructed image.

Namely, the diameter DS of the convex lens 6 closer to the diffusion surface light source 17 in the tandem lens system 6, 8 and the distance LS between the convex lens 6 and the spatial light modulating device 7 are set and arranged such that the relationship therebetween keeps the above-mentioned angle of $\theta$ or greater at any position of the spatial light modulating device 7.

In this case, the interval of the interference fringes occurring on the spatial light modulating device 7 due to the diffusion surface light source 17 is substantially smaller than the modulating element interval of the spatial light modulating device, whereby the probability of pixels of the image represented on the spatial light modulating device 7 not irradiated with light becoming defect pixels is lowered.

This hologram making method has the magnification optical system 5 for generating an area of the diffusion surface light source 17 sufficient for making diffused light incident on the whole diameter LS of the convex lens 6. This case yields the effect of producing a second diffusion surface light source having a diameter sufficient for making the interval of interference fringes generated on the spatial light modulating device 7 due to the diffusion surface light source 17 substantially smaller than the modulating element (pixel) interval of the spatial light modulating device 7.

Also, in addition to the effect that the size of light distribution at the light-converging point determined by the resolution of the spatial light modulating device, the wavelength, and the focal length of the light-collecting device can be made variable in a greater range, and the effect that, since the light distribution formed by a convolution integral of the diffusion light source and the spectrum of the spatial light modulating device 7 is written into the elementary hologram, the light distribution is fully widened, so that the dynamic range of the photosensitive material 12 is not exceeded regardless of the kind of images represented by the spatial light modulating device 7, it is possible to have the effect that, even when noise exists in the reconstructed image of the spatial light modulating device 7 itself or in the reconstructed image of the projected image of the spatial light modulating device 7, the noise itself is substantially fixed at the observing position and thus is unremarkable.

As explained in the foregoing, the above-mentioned hologram making method can reduce the noise observed in reconstructed images.

**Industrial Applicability**

The present invention can be utilized in a one-step type hologram making method.

**Claims**

1.  A hologram making method comprising the steps of:

    displaying images actually or virtually observed from a plurality of viewpoints one by one in time series or simultaneously on a display surface; and
    using the images displayed on said display surface as object light, and converging said object light with a lens to irradiate a recording surface through an aperture provided at a position corresponding to said viewpoints while irradiating said recording surface with reference light, so as to record interference light between said object light and said reference light onto said recording surface and make a hologram,

    wherein the distance between said display surface and said lens is set such that a real or virtual image position of said object light formed by said lens is an observing position of said hologram.

2.  A hologram making method according to claim 1, wherein said display surface is a spatial light modulating device or a diffuser screen on which an image displayed on said spatial light modulating device is projected.

3.  A hologram making method according to claim 1, wherein said display surface is a spatial light modulating device, said spatial light modulating device modulating an incident luminous flux pixel by pixel.

4.  A hologram making method according to claim 3, wherein said luminous flux provided by said spatial light modulating device is diffused light emitted from a diffuser as said diffuser is irradiated with laser light, emitted from a laser light source, having a diameter enlarged by a magnification optical system.

5.  A hologram making method according to claim 4, comprising an imaging optical system for forming an image of said diffused light onto said recording surface.

6.  A hologram making method according to claim 5, wherein said imaging optical system includes said lens.

7.  A hologram making method according to claim 6, wherein said imaging optical system includes two lenses opposing each other, said spatial light modulating device being disposed between said two lenses.

8.  A hologram making method according to claim 7, wherein, letting $\lambda$ be the wavelength of said luminous flux emitted from said diffuser, DS be the diameter of the lens on said diffuser side in said two lenses, LS be the distance between said lens and said spatial light modulating device, $\theta$ be the angle formed between an optical axis of said lens and a segment connecting a radial end part of said lens and an end part of said spatial light modulating device, and P be the interval between said pixels in said spatial light modulating device, DS and LS are set such that $\theta$ is $\sin^{-1}(\lambda/P)$ or greater.

**Fig.1**

EP 1 326 145 A1

Fig.2

# Fig.3

EP 1 326 145 A1

*Fig.4*

Fig.5

*Fig.6*

## Fig.7

# Fig.8

## INTERNATIONAL SEARCH REPORT

| International application No. |
|---|
| PCT/JP01/06578 |

| A. CLASSIFICATION OF SUBJECT MATTER |
|---|
| Int.Cl⁷ G03H1/26 |

According to International Patent Classification (IPC) or to both national classification and IPC

| B. FIELDS SEARCHED |
|---|
| Minimum documentation searched (classification system followed by classification symbols)<br>Int.Cl⁷ G03H1/26 |

Documentation searched other than minimum documentation to the extent that such documents are included in the fields searched
Jitsuyo Shinan Koho       1926-1996     Toroku Jitsuyo Shinan Koho   1994-2001
Kokai Jitsuyo Shinan Koho  1971-2001     Jitsuyo Shinan Toroku Koho   1996-2001

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 47-44655 B (Konishiroku Photo Ind. Co., Ltd.),<br>11 November, 1972 (11.11.72),<br>Full text; all drawings<br>(Family: none) | 1-8 |
| A | EP 929018 A2 (Sony Corporation),<br>14 July, 1999 (14.07.99),<br>Full text; all drawings<br>& JP 11-258971 A<br>Full text; all drawings<br>& CN 1229937 A       & KR 99067736 A<br>& US 6185018 B1 | 1-8 |
| A | JP 11-296057 A (Hamamatsu Photonics K.K.),<br>29 October, 1999 (29.10.99),<br>Full text; all drawings<br>(Family: none) | 1-8 |

☐ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>07 November, 2001 (07.11.01) | Date of mailing of the international search report<br>06 November, 2001 (06.11.01) |
|---|---|
| Name and mailing address of the ISA/<br>Japanese Patent Office | Authorized officer |
| Facsimile No. | Telephone No. |

Form PCT/ISA/210 (second sheet) (July 1992)